# EUROPEAN PATENT SPECIFICATION

(11) **EP 2 322 396 B1**
(45) Date of publication and mention of the grant of the patent: **02.10.2013**
(21) Application number: 10382286.2
(22) Date of filing: 29.10.2010
(51) Int. Cl.: B60T 7/06, B60T 7/10, B60T 11/18, B60R 21/09

(54) **Method for preventing the clearance between two parts of a mechanism linked to one another with a certain play**
Methode zum Verhindern der Spaltbildung zwischen zwei Teilen eines Mechanismus, die mit einem bestimmten Spiel miteinander verbunden sind
Méthode pour la prévention de la formation d'un espace entre deux pièces d'un mécanisme liées l'une à l'autre avec un certain jeu

(30) Priority: 17.11.2009 ES 200902226
(43) Date of publication of application: 18.05.2011
(73) Proprietor: Flexngate Automotive Iberica, S.A., 08520 Les Franqueses Del Valles (ES)
(72) Inventor: Nicolas Domingo, Joaquin, 08390, Montgat (ES); Garcia Vila, Jordi, 08980, Sant Feliu De Llobregat (ES)
(74) Representative: Sugrañes Patentes y Marcas

(56) References cited:
- DE-A1- 10 105 546
- DE-A1-102007 032 515
- FR-A1- 2 855 279
- US-A1- 2009 250 285

## Description

### Technical Field of the Invention

The invention relates to a method for preventing the clearance between two parts of a mechanism linked or connected to one another with a certain play, i.e., joined such that they can have movement without being separated, applicable to mechanisms in which a first part is assembled between the two facing branches of a second part, being able to move in a guided manner between said branches, for example in a manner rotating about a rotation shaft joined to both facing branches of the second part, the mechanism further comprising a frangible pin traversing both the facing branches of said second part and the body of the first part to immobilize the rotation of the first with respect to the second. The pin is intended to be broken when a moment greater than a determined threshold value is applied on the first part.

The invention also relates to the use of the method in the manufacture of a mechanism for coupling a pedal body to a main rotation shaft supported in the chassis of a vehicle; and to a frangible pin particularly suitable for putting the system according to the invention into practice.

### Background of the Invention

Patent document DE102007032515 describes a mechanism for coupling a pedal body to a main rotation shaft supported in the chassis of a vehicle, comprising a first part, provided with a cam surface, rotatably assembled around a hollow cylinder intended to house the mentioned main shaft and fixed between two facing elements to which the pedal body is rotatably coupled. The mechanism is provided with securing means keeping the first part integral with the second part during the normal operation of the mechanism, said securing means being suitable for being disabled when a moment greater than a predetermined threshold value is applied to the first part. This situation occurs, for example, when there is a head-on collision of the vehicle and the first part runs into a section of the vehicle structure. In these circumstances the first part rotates about the hollow cylinder and a cam surface of the first part cooperates mechanically with the pedal body, forcing it to rotate such that the end on which the driver's foot is supported retreats in the direction opposite to the mentioned driver, for the purpose of minimizing the damage that the pedal might cause in the event of a collision of the vehicle.

A known solution for implementing the securing means consists of providing the first part and the facing branches of the second part with respective through holes, which are simultaneously traversed by a frangible pin immobilizing the rotation of the first part with respect to the second part during the normal operation of the mechanism.

The material and the thickness of the frangible pin are selected such that it is broken when the moment applied on the first part exceeds a predetermined threshold value, which depends on the force of the collision of the vehicle.

The frangible pin is occasionally provided with a series of longitudinal ribs the purpose of which is to improve the fitting between the pin and the through hole made in the first part, and thus maximally reduce or eliminate the movement of said first part with respect to the pin in a radial direction.

Nevertheless, for the correct operation of the mechanism it is essential for there to be a certain clearance between the first part and the facing arms of the second part, to assure that the first part can rotate without obstacles about the hollow cylinder in the event of a collision. This fact entails that, even when the pin is inserted in its operational position, the first part can move axially with respect to the pin and hit any of the facing branches of the second part, which occurs in practice due to the vibrations transmitted by the vehicle when it is moving, causing an unwanted sound, noise or clinking.

The main objective of the present invention are a method and a mechanism which solves the aforementioned drawback, without altering the mechanical properties of the previously selected pin, and especially its shear strength, which are given by the cross-section of the pin in the transition sections between the first and second parts.

### Disclosure of the Invention

The method of the invention is characterized in that into the through holes made in the first part and in the two facing branches of the second part there is inserted a frangible pin originally provided, along a portion far from its insertion end, with a series of longitudinal ribs providing its cross-section with a greater maximum width than the nominal or cutting width of the through hole made in the first part, whereby since the frangible pin has been introduced through its insertion end into the mentioned through hole, in a first phase it slides therein without obstacles towards the branch of the second part located on the other side; in a second phase the front end of the ribs moves by pushing, the first part until applying it against the mentioned branch of the second part; and in a third phase the material forming the ribs is plastically deformed, a hard accumulation of material being formed which prevents the return of the first part in the direction opposite to its first movement.

According to another aspect of the invention, a mechanism is claimed for coupling a pedal body to a main rotation shaft supported in the chassis of a vehicle obtained using the method of the invention, wherein the second part is rotatably assembled around a rotation shaft formed by a hollow cylindrical body, joined to both facing branches of the second part, inside which the mentioned main shaft passes; wherein the pedal body is rotatably coupled to the second part; and wherein the first part is provided with a cam surface cooperating mechanically with the pedal body, forcing it to rotate with respect to the second part in the event of initiating a rotational movement entailing the breaking of the frangible pin.

According to a variant of the invention, the mechanism is a mechanism for coupling a brake pedal such that, a cutting segment and a tearing segment being distinguished in the through hole made in the first part, the frangible pin is introduced into the mentioned through hole through the side into which the tearing segment opens.

According to another variant of the invention, the mechanism is a mechanism for coupling a clutch pedal such that, a cutting segment and a tearing segment being distinguished in the through hole made in the first part, the frangible pin is introduced into the mentioned through hole through the side on which the cutting segment opens out, the frangible pin being such, that it can be expanded by the deformation of its ribs in the free space separating the first part from the opposite branch of the second part.

Another object of the invention is a mechanism for coupling a pedal body to a main rotation shaft supported in the chassis of a vehicle, comprising a first part, provided with a cam surface, assembled movably and in a guided manner between two facing branches of a second part to which the pedal body is in turn rotatably coupled, the mechanism further comprising a frangible pin simultaneously traversing both the facing branches of the second part and the body of the first part to immobilize the rotation of the first with respect to the second, and all this such that the cam surface can cooperate mechanically with the pedal body, forcing it to rotate with respect to the second part, in the event of initiating a rotational movement entailing the breaking of the frangible pin.

The mechanism is particularly suitable for the embodiment variants in which the first part is rotatably assembled around a rotation shaft integrally arranged between the two facing branches of the second part.

The mechanism is essentially characterized in that said first part rests applied against one of the branches of the second part, and in that it is prevented from moving towards the opposite branch of the second part by an accumulation of the material from which the frangible pin is formed, the accumulation being a plastically deformed portion of the pin.

According to another feature of the mechanism, the insertion end of the frangible pin is riveted, its extraction in the reverse direction to that of its introduction into the first part being prevented.

According to another feature of the mechanism, the frangible pin is originally provided, along a portion far from its insertion end, with a series of longitudinal ribs providing its cross-section with a greater maximum width than the nominal or cutting width of the through hole made in the first part, the sections of the pin forming the mentioned ribs being such that they are plastically deformed during the operation of inserting the pin into said through hole of the first part.

According to a preferred embodiment, the respective through holes made in the facing branches of the second part have a different diameter, one of them being smaller than the greater maximum width of the pin.

A frangible pin especially suitable for putting the invention into practice is formed by a plastic rivet provided with a head at one end, and is characterized in that it is provided with two series of longitudinal ribs, the ribs of the first series extending along the main portion of the rivet, which is intended to be broken, and intended to make the pin fit tightly inside the through hole of a part; and the ribs of the second series extending only along a segment close or adjacent to the head, without reaching the end of the ribs of the first series closest to the insertion end of the rivet, the ribs of this second series having a greater height than those of the first series and the ribs of this second series being intended to be deformed by abutment against the inlet opening of the through hole of the mentioned part.

The ends of the ribs of the second series closest to the insertion end of the rivet preferably have a bevelled or round edge.

### Brief Description of the Drawings

Figure 1 is a perspective view of a mechanism for coupling a pedal of a vehicle to the corresponding main rotation shaft;
Figures 2 and 3 are respective schematic views of the mechanism of Figure 1 during the normal operation of the vehicle and moments after a crash has occurred, respectively;
Figure 4 is a schematic sectional view of the area of the pin in a system according to the invention applied to the mechanism for coupling a brake pedal;
Figure 5 is a schematic sectional view of the area of the pin in a system according to the invention applied to the mechanism for coupling a clutch pedal;
Figure 6 is a side view of a pin for putting into practice the variant of the invention according to Figure 4;
Figures 7 and 8 are respective sectional views of the pin of Figure 6 according to section planes AA and BB, respectively;
Figure 9 is a side view of a pin for putting into practice the variant of the invention according to Figure 5;
Figures 10 and 11 are respective sectional views of the pin of Figure 9 according to section planes AA and BB, respectively;
Figure 12 is a schematic sectional view of the area of the pin in a conventional system.

### Detailed Description of the Invention

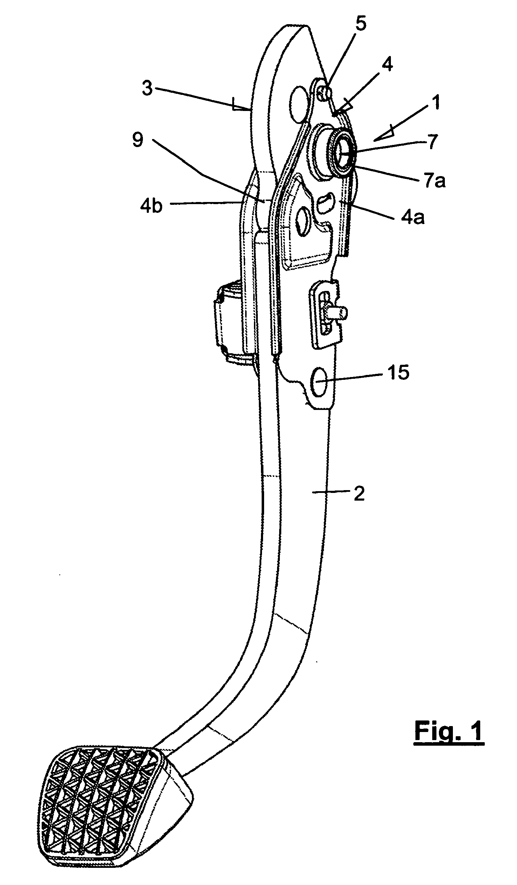

Figure 1 depicts a mechanism 1 for coupling a pedal body 2 to a main rotation shaft supported in the chassis of a vehicle which, in a known manner, comprises a first part 3, provided with a cam surface 9, rotatably assembled around a rotation shaft 7 formed by a hollow cylindrical body 7a fixed by welding between the two facing branches 4a and 4b of a second part 4.

The second part 4 comprises the two facing branches 4a and 4b, which are joined together by means of a bridge portion, each of which is prolonged at the lower part to support a second rotation shaft 15, around which the pedal body 2 is assembled.

The mechanism 1 further comprises a frangible pin 5 simultaneously traversing both the facing branches 4a and 4b of the second part 4 and the body of the first part 3 to immobilize the rotation of the mentioned first part 3 with respect to the second part 4. Under these conditions the pedal body 2, the first part 3 and the second part 4 remain integral and rotate together about a main shaft passing inside the hollow cylindrical body 7a when the pedal body 2 is actuated by the driver of the vehicle.

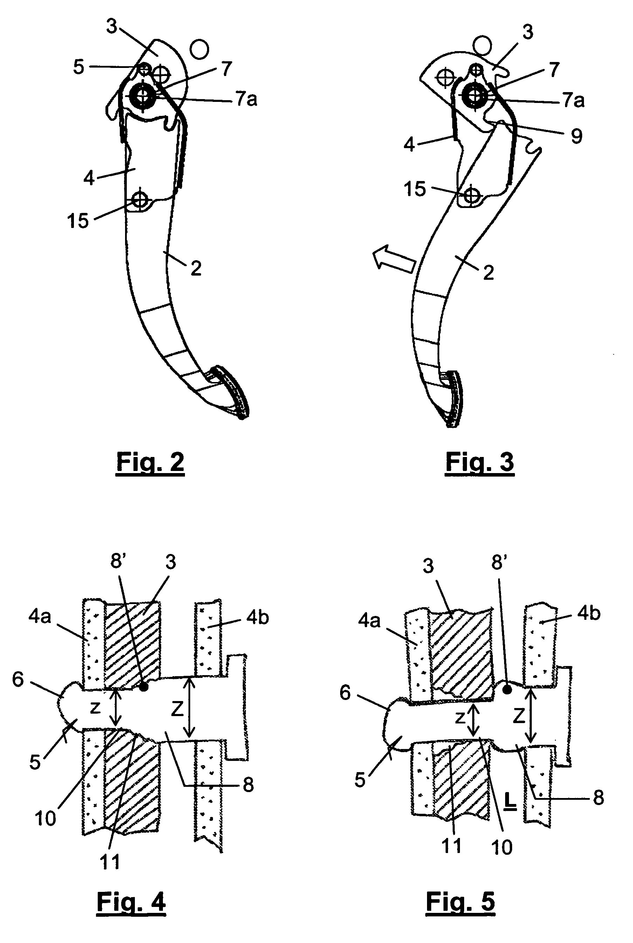

In the event that a crash occurs, the first part initiates a rotational movement by the pushing of a non-deformable element of the vehicle, as illustrated in the sequence of Figures 2 and 3, which causes first the breaking of the frangible pin 5 and subsequently the rotation of the pedal body 2 about the second rotation shaft 15, by the pushing of the cam surface 9 of the first part 3, in the direction indicated by the arrow of Figure 3.

For preventing the first part 3 from moving in the axial direction with respect to the frangible pin 5, the system of the invention envisages providing the frangible pin 5 with suitable means so that, once it has been correctly inserted into the through hole made for such purpose in the first part 3, said first part is applied against one of the branches of the second part 4, being prevented from moving towards the opposite branch of the second part by an accumulation of the material from which the frangible pin 5 is formed, which has been moved from its original location in the pin by the plastic deformation thereof during the operation of sliding along the through hole of the first part 3.

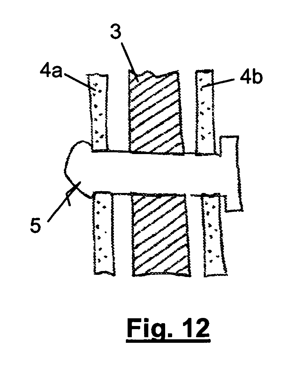

To that end, as observed in Figures 4, 5, 6 and 9, there is a frangible pin 5 originally provided, along a portion far from its insertion end 6, with a series of longitudinal ribs 8 providing its cross-section with a greater maximum width (Z) than the nominal or cutting width (z) of the through hole made in the first part 3, whereby since the frangible pin has been introduced through its insertion end 6 into the mentioned through hole, in a first phase it slides therein without obstacles towards the branch 4a of the second part 4 located on the other side; in a second phase the front end of the ribs 8 moves, by pushing, the first part 3 until applying it against the branch 4a of the second part 4; and in a third phase the material forming the ribs 8 is plastically deformed, a hard accumulation 8' of material being formed which prevents the return of the first part 3 in the direction opposite to its first movement. It must be stated that in Figures 4, 5 and 12 the real proportions between the parts of the mechanism, and especially of the clearance existing between the first part 3 and the facing branches 4a and 4b of the second part 4 have not been respected in order to facilitate the reader's understanding. Likewise, the bulging in the frangible pin 5 caused by the accumulation 8' of material has been exaggerated in order to better show the technical effect sought.

In operations of stamping or punching, and specifically when a through hole is made in a metal body, it is common for a tearing effect to occur in the material which gives rise to through holes in which a first cutting segment and a rear tearing segment are distinguished in the advance direction of the tool. Figures 4 and 5 illustrate how the system according to the invention is applicable when the frangible pin 5 is introduced into the through hole of the part 3 through the side on which the tearing segment 11 opens out, and also when the frangible pin 5 is introduced into the mentioned through hole through the side on which the cutting segment 10 opens out, the frangible pin 5 expanding in the latter case by the deformation of its longitudinal ribs 8 in the free space (L) separating the first part 3 from the facing branch 4b of the second part 4.

In both cases it is envisaged that the insertion end 6 of the frangible pin 5 is riveted, its extraction in the reverse direction to that of its introduction into the first part 3 being prevented by the bulging at its insertion end. It is observed in the two embodiment variants that the first part 3 is prevented from moving towards the branch 4b of the second part 4 by the effect caused by the bulging formed by the hard accumulation 8' of the material forming the ribs 8, which is more substantial in the variant of Figure 5 since the material expands in a radial direction.

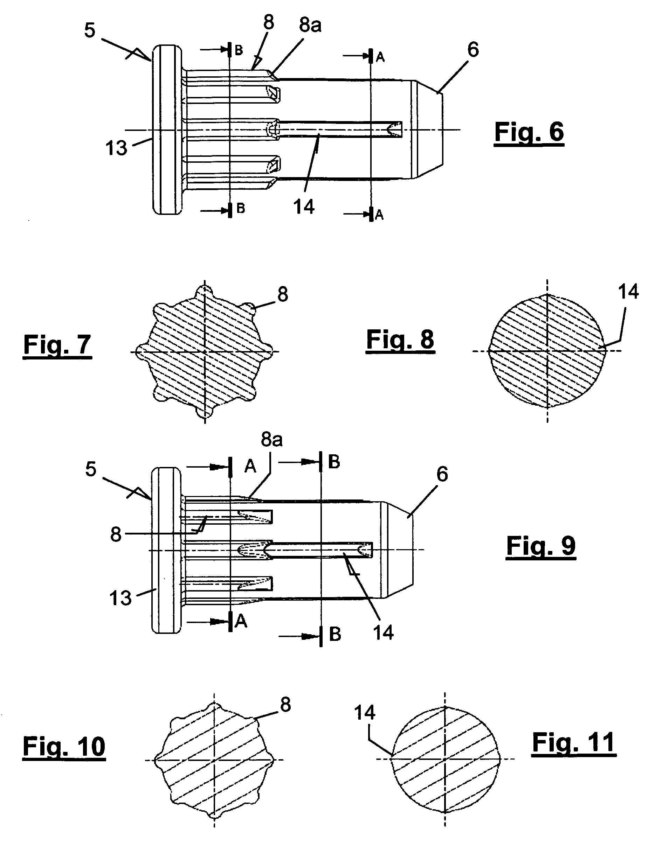

Figures 6 and 9 depict respective frangible pins 5 for putting the variants of Figures 4a and 5a, respectively, into practice, showing that the ribs 8 have an edge 8a which is bevelled or round to a greater or lesser extent according to the side through which the frangible pin 5 is intended to be introduced into the first part 3.

In the depicted variants, the frangible pins 5 are formed by a plastic rivet, provided with a head 13 at one end, provided with two series of longitudinal ribs, the ribs 14 of the first series extending along the main portion of the rivet, which is intended to be broken, which maintains the same section of a conventional pin. The ribs 14, of a short height, are intended to make the frangible pin 5 fit tightly inside the through hole of the first part 3 to prevent the movement thereof in a radial direction. The provision of ribs 13 of this type is usual in the art.

Unlike known frangible pins, the depicted variants are provided, as has been stated above, with a second series of longitudinal ribs, the ribs 8 of this second series extending only along a segment close or adjacent to the head 13, without reaching the portion of the rivet intended to be broken in order to not alter its shear strength.

In order for them to fulfil the desired effect, the ribs 8 of this second series have a greater height than the ribs 14 of the first series, since they are intended to be deformed by abutment against the inlet opening of the through hole of the mentioned part 3.

The fact that it is not necessary to alter or modify the material from which the frangible pins normally used in mechanisms for coupling pedals of this type are made for the described deformation effect to occur during the operation of introducing them into the parts 3 and 4 is a practical advantage of the invention. Thus, for example, it has been found that the use of a polyamide 66 rivet, with a fibreglass content of 30 to 35%, provided with a second series of ribs 8 but which maintains a cross-section in its portion intended to be broken identical to that of a pin without this second series of ribs 8, completely eliminated the movement of the first part 3 in an axial direction, and therefore any noise associated with its movement, without modifying the shear strength thereof and therefore without altering the behaviour of the mechanism 1 in the event of an impact or crash of the vehicle.

## Claims

1. A method for preventing the clearance between two parts of a mechanism linked to one another with a certain play, applicable to mechanisms in which a first part (3) can rotatably move in a guided manner between the two facing branches (4a, 4b) of a second part (4), about a rotation shaft (7) joined to both facing branches of the second part, the mechanism further comprising a frangible pin (5) traversing both the facing branches of said second part and the body of the first part to immobilize the rotation of the first with respect to the second, whereby into the through holes made in the first part and in the two facing branches of the second part a frangible pin is inserted, the frangible pin originally provided, along a portion far from its insertion end, with a series of longitudinal ribs (8) providing its cross-section with a greater maximum width (Z) than the nominal or cutting width (z) of the through hole made in the first part, whereby since the frangible pin has been introduced through its insertion end (6) into the mentioned through hole, in a first phase it slides therein without obstacles towards the branch of the second part located on the other side; in a second phase the front end of the ribs moves, by pushing, the first part until applying it against the mentioned branch of the second part; and in a third phase the material forming the ribs is plastically deformed, a hard accumulation (8') of material being formed which prevents the return of the first part in the direction opposite to its first movement.

2. A mechanism for coupling a pedal body (2) to a main rotation shaft supported in the chassis of a vehicle obtainable by the method according to claim 1, wherein the second part is rotatably assembled around a rotation shaft (7) formed by a hollow cylindrical body (7a), joined to both facing branches (4a, 4b) of the second part (4), inside which the mentioned main shaft passes; wherein the pedal body is rotatably coupled to the second part (4); and wherein the first part (3) is provided with a cam surface (9) cooperating mechanically with the pedal body, forcing it to rotate with respect to the second part in the event of initiating a rotational movement entailing the breaking of the frangible pin (5).

3. The mechanism according to claim 2, wherein the pedal body is preferably a brake pedal body, and wherein a cutting segment (10) and a tearing segment (11) are distinguished in the through hole made in the first part, and in that the frangible pin (5) is introduced into the mentioned through hole through the side on which the tearing segment opens out.

4. The mechanism according to claim 2, wherein the pedal body is preferably a clutch pedal body, and wherein a cutting segment (10) and a tearing segment (11) are distinguished in the through hole made in the first part, and in that the frangible pin (5) is introduced into the mentioned through hole through the side on which the cutting segment opens out, the frangible pin being expanded by the deformation of its longitudinal ribs (8) in the free space (L) separating the first part (3) from the facing branch (4b) of the second part (4).

5. A mechanism (1) for coupling a pedal body (2) to a main rotation shaft supported in the chassis of a vehicle, comprising a first part (3), provided with a cam surface (9), linked to a second part (4) to which the pedal body is rotatably coupled, the first part being assembled movably in a guided manner between two facing branches (4a, 4b) of the second part (4), the mechanism further comprising a frangible pin (5) simultaneously traversing both the facing branches of the second part and the body of the first part to immobilize the rotation of the first with respect to the second, and all this such that the cam surface can cooperate mechanically with the pedal body, forcing it to rotate with respect to the second part, in the event of initiating a rotational movement entailing the breaking of the frangible pin, whereby said first part rests applied against one of the branches of the second part, and in that it is prevented from moving towards the opposite branch of the second part by an accumulation (8') of the material from which the frangible pin is formed.

6. The mechanism (1) according to the previous claim, **characterized in that** the accumulation (8') of the material from which the frangible pin (5) is formed is a plastically deformed portion of the pin.

7. The mechanism (1) according to the previous claim, **characterized in that** the insertion end (6) of the frangible pin (5) is riveted, its extraction in the reverse direction to that of its introduction into the first part (3) being prevented.

8. The mechanism (1) according to any one of claims 5 to 7, **characterized in that** the frangible pin (5) is originally provided, along a portion far from its insertion end (6), with a series of longitudinal ribs (8) providing its cross-section with a greater maximum width (Z) than the nominal or cutting width (z) of the through hole made in the first part (3), the sections of the pin forming the mentioned ribs being such that they are plastically deformed during the operation of inserting the pin into said through hole of the first part.

9. The mechanism (1) according to any one of claims 5 to 7, **characterized in that** the respective through holes made in the facing branches (4a, 4b) of the second part (4) have a different diameter, one of them being smaller than the greater maximum width of the pin.

## Patentansprüche

1. Verfahren zur Verhinderung des Zwischenraums zwischen zwei Teilen eines Mechanismus, die mit einem bestimmten Spiel miteinander verbunden sind, welches für Mechanismen anwendbar ist, bei welchen sich ein erstes Teil (3) zwischen den beiden gegenüberliegenden Zweigen (4a, 4b) eines zweiten Teils (4) geführt drehbar bewegen kann, um eine Drehachse (7), welche zu beiden gegenüberliegenden Zweigen des zweiten Teils verbunden ist, wobei der Mechanismus zusätzlich einen zerbrechlichen Stift (5) umfasst, welcher sowohl die gegenüberliegende Zweige des genannten zweiten Teils als auch den Körper des ersten Teils durchquert, um die Drehung des Ersten in Bezug auf das Zweite zu blockieren, womit in den im ersten Teil und in den beiden gegenüberliegenden Zweigen des zweiten Teils gebildeten Durchgangslöchern ein zerbrechlicher Stift eingeführt ist, wobei der zerbrechliche Stift, entlang eines Teils weit von seinem Einführungsende, ursprünglich mit einer Anzahl an Längsrippen (8) versehen ist, welche seinen Querschnitt mit einer größeren maximalen Breite (Z) als die Nenn- oder Schnittbreite (z) des in dem ersten Teil gebildeten Durchgangslochs versehen, womit da der zerbrechliche Stift durch sein Einführungsende (6) in das genannte Durchgangsloch eingebracht worden ist, dieser in einer ersten Phase in dasselbe ohne Hindernisse zum Zweig des zweiten Teils, welches sich auf der anderen Seite befindet, gleitet; in einer zweiten Phase das vordere Ende der Rippen mittels Druck das erste Teil bewegt, bis dieses gegen den genannten Zweig des zweiten Teils angelegt wird; und in einer dritten Phase sich das die Rippen bildende Material plastisch verformt, wobei sich eine harte Ansammlung (8') von Material bildet, welche die Rückkehr des ersten Teils in der zu seiner ersten Bewegung entgegengesetzten Richtung verhindert.

2. Mechanismus zur Ankopplung eines Pedalkörpers (2) an eine Hauptdrehachse, welche an das Fahrgestell eines Fahrzeugs gestützt ist, welcher mit dem Verfahren nach Anspruch 1 erhältlich ist, wobei das zweite Teil um eine von einem hohlen zylindrischen Körper (7a) gebildete Drehachse (7) drehbar montiert ist, welche mit beiden gegenüberliegenden Zweigen (4a, 4b) des zweiten Teils (4) verbunden ist, durch dessen Inneren die genannte Hauptachse läuft; wobei der Pedalkörper an das zweite Teil (4) drehbar angekoppelt ist; und wobei das erste Teil (3) mit einer Nockenfläche (9) versehen ist, welche mit dem Pedalkörper mechanisch zusammenwirkt und diesen dazu zwingt, sich in Bezug auf das zweite Teil zu drehen, falls eine Drehbewegung begonnen wird, die den Bruch des zerbrechlichen Stifts (5) mit sich bringt.

3. Mechanismus nach Anspruch 2, wobei der Pedalkörper vorzugsweise ein Bremspedalkörper ist, und wobei in dem in dem ersten Teil gebildeten Durchgangsloch ein Schneidsegment (10) und ein Reißsegment (11) erkannt werden, und wobei der zerbrechliche Stift (5) in das genannte Durchgangsloch durch die Seite eingebracht wird, in welche das Reißsegment mündet.

4. Mechanismus nach Anspruch 2, wobei der Pedalkörper vorzugsweise ein Kupplungspedalkörper ist, und wobei in dem in dem ersten Teil gebildeten Durchgangsloch ein Schneidsegment (10) und ein Reißsegment (11) erkannt werden, und wobei der zerbrechliche Stift (5) in das genannte Durchgangsloch durch die Seite eingebracht wird, in welche das Schneidsegment mündet, wobei sich der zerbrechliche Stift durch die Verformung seiner Längsrippen (8) in dem Freiraum (L) ausdehnt und das erste Teil (3) von dem gegenüberliegenden Zweig (4b) des zweiten Teils (4) trennt.

5. Mechanismus (1) zur Ankopplung eines Pedalkörpers (2) an eine Hauptdrehachse, welche an das Fahrgestell eines Fahrzeugs gestützt ist, umfassend ein erstes Teil (3), welches mit einer Nockenfläche (9) versehen ist, das mit einem zweiten Teil (4) verbunden ist, an welchem der Pedalkörper drehbar angekoppelt ist, wobei das erste Teil zwischen zwei gegenüberliegenden Zweigen (4a, 4b) des zweiten Teils (4) beweglich geführt montiert ist, wobei der Mechanismus zusätzlich einen zerbrechlichen Stift (5) umfasst, welcher gleichzeitig sowohl die gegenüberliegende Zweige des zweiten Teils als auch den Körper des ersten Teils durchquert, um die Drehung des Ersten in Bezug auf das Zweite zu blockieren, und all dies derart, dass die Nockenfläche mit dem Pedalkörper mechanisch zusammenwirken kann und diesen dazu zwingt, sich in Bezug auf das zweite Teil zu drehen, falls eine Drehbewegung begonnen wird, die den Bruch des zerbrechlichen Stifts mit sich bringt, womit das genannte erste Teil gegen einen der Zweige des zweiten Teils angelegt bleibt, und wobei seine Bewegung zum entgegengesetzten Zweig des zweiten Teils durch eine Ansammlung (8') des Materials, aus welchem der zerbrechliche Stift gebildet ist, verhindert wird.

6. Mechanismus (1) nach dem vorhergehenden Anspruch, **dadurch gekennzeichnet, dass** die Ansammlung (8') des Materials, aus welchem der zerbrechliche Stift (5) gebildet ist, ein plastisch verformter Teil des Stifts ist.

7. Mechanismus (1) nach dem vorhergehenden Anspruch, **dadurch gekennzeichnet, dass** das Einführungsende (6) des zerbrechlichen Stifts (5) vernietet ist, wobei sein Auszug in der umgekehrten Richtung bezüglich die der Einbringung in das erste Teil (3) verhindert wird.

8. Mechanismus (1) nach einem der Ansprüche 5 bis 7, **dadurch gekennzeichnet, dass** der zerbrechliche Stift (5), entlang eines Teils weit von seinem Einführungsende (6), ursprünglich mit einer Anzahl an Längsrippen (8) versehen ist, welche seinen Querschnitt mit einer größeren maximalen Breite (Z) als die Nenn- oder Schnittbreite (z) des in dem ersten Teil (3) gebildeten Durchgangslochs versehen, wobei die Abschnitte des Stifts, welche die genannte Rippen bilden so gestaltet sind, dass sie bei dem Vorgang der Einführung des Stifts in das genannte Durchgangsloch des ersten Teils plastisch verformt werden.

9. Mechanismus (1) nach einem der Ansprüche 5 bis 7, **dadurch gekennzeichnet, dass** die jeweilige in den gegenüberliegenden Zweigen (4a, 4b) des zweiten Teils (4) gebildete Durchgangslöcher einen verschiedenen Durchmesser haben, wobei ein Durchmesser kleiner als die größere maximale Breite des Stifts ist.

## Revendications

1. Procédé de prévention de dégagement entre deux parties d'un mécanisme reliées l'une à l'autre avec un certain jeu, applicable à des mécanismes dans lesquels une première partie (3) peut se déplacer de façon rotative de manière guidée entre les deux branches opposées (4a, 4b) d'une deuxième partie (4), autour d'un arbre de rotation (7) uni aux deux branches opposées de la deuxième partie, le mécanisme comprenant, en outre, une broche fragile (5) traversant aussi bien les branches opposées de ladite deuxième partie que le corps de la première partie pour immobiliser la rotation de la première par rapport à la deuxième, de ce fait dans les trous traversants aménagés dans la première partie et dans les deux branches opposées de la deuxième partie est insérée une broche fragile, la broche fragile pourvue originalement, le long d'une portion éloignée de son extrémité d'insertion, d'une série de nervures longitudinales (8) fournissant une section transversale d'une largeur maximale supérieure (Z) à la largeur de coupe ou nominale (z) du trou traversant aménagé dans la première partie, de ce fait, étant donné que la broche fragile a été introduite à travers son extrémité d'insertion (6) dans ledit trou traversant, dans une première phase, elle glisse en son sein sans obstacles vers la branche de la deuxième partie située sur l'autre côté ; dans une deuxième phase l'extrémité avant des nervures déplace, en poussant, la première partie jusqu'à l'appliquer contre ladite branche de la deuxième partie ; et dans une troisième phase la matière formant les nervures est déformée plastiquement, une accumulation dure (8') de matière étant formée, ce qui évite le retour de la première partie dans le sens opposé à son premier déplacement.

2. Mécanisme de couplement d'un corps de pédale (2) à un arbre de rotation principal supporté dans le châssis d'un véhicule pouvant être obtenu par le procédé selon la revendication 1, dans lequel la deuxième partie est assemblé de manière rotative autour d'un arbre de rotation (7) formé par un corps cylindrique creux (7a), uni aux deux branches opposées (4a, 4b) de la deuxième partie (4), à l'intérieur duquel passe ledit arbre principal ; dans lequel le corps de pédale est couplé de manière rotative à la deuxième partie (4) ; et dans lequel la première partie (3) est pourvue d'une surface de came (9) coopérant mécaniquement avec le corps de pédale, en le forçant à tourner par rapport à la deuxième partie en cas d'initiation d'un mouvement de rotation entraînant la rupture de la broche fragile (5).

3. Mécanisme selon la revendication 2, dans lequel le corps de pédale est de préférence un corps de pédale de frein, et dans lequel on distingue un segment de coupe (10) et un segment de déchirage (11) dans le trou traversant aménagé dans la première partie, et dans lequel la broche fragile (5) est introduite dans ledit trou traversant à travers le côté sur lequel s'ouvre le segment de déchirage.

4. Mécanisme selon la revendication 2, dans lequel le corps de pédale es de préférence un corps de pédale d'embrayage, et dans lequel on distingue un segment de coupe (10) et un segment de déchirage (11) dans le trou traversant aménagé dans la première partie, et dans lequel la broche fragile (5) est introduite dans ledit trou traversant à travers le côté sur lequel s'ouvre le segment de coupe, la broche fragile étant élargie par la déformation de ses nervures longitudinales (8) dans l'espace libre (L) séparant la première partie (3) de la branche opposée (4b) de la deuxième partie (4).

5. Mécanisme (1) de couplement d'un corps de pédale (2) à un arbre de rotation principal supporté dans le châssis d'un véhicule, comprenant une première partie (3), pourvue d'une surface de came (9), unie à une deuxième partie (4) à laquelle est couplé de manière rotative le corps de pédale, la première partie étant assemblée de façon rotative de manière guidée entre deux branches opposées (4a, 4b) de la deuxième partie (4), le mécanisme comprenant, en outre, une broche fragile (5) traversant simultanément aussi bien les deux franches opposées de la deuxième partie que le corps de la première partie pour immobiliser la rotation de la première par rapport à la deuxième, et tout cela de manière à ce que la surface de came puisse coopérer mécaniquement avec le corps de pédale, en le forçant à tourner par rapport à la deuxième partie en cas d'initiation d'un mouvement de rotation entraînant la rupture de la broche fragile (5), dans lequel ladite première partie demeure appliquée contre une des branches de la deuxième partie, et dans lequel on évite son déplacement vers la branche opposée de la deuxième partie par une accumulation (8') de la matière dont est formée la broche fragile.

6. Mécanisme (1) selon la revendication précédente, **caractérisé en ce que** l'accumulation (8') de la matière dont est formée la broche fragile (5) es une portion déformée plastiquement de la broche.

7. Mécanisme (1) selon la revendication précédente, **caractérisé en ce que** l'extrémité d'insertion (6) de la broche fragile (5) est rivetée, son extraction dans le sens inverse à celui de son introduction dans la première partie (3) étant évitée.

8. Mécanisme (1) selon l'une quelconque des revendications 5 à 7, **caractérisé en ce que** la broche fragile (5) est pourvue originalement, le long d'une portion éloignée de son extrémité d'insertion (6), d'une série de nervures longitudinales (8) fournissant une section transversale d'une largeur maximale supérieure (Z) à la largeur de coupe ou nominale (z) du trou traversant aménagé dans la première partie (3), les sections de la broche formant lesdites nervures étant telles qu'elles sont déformées plastiquement durant l'opération d'insertion de la broche dans ledit trou traversant de la première partie.

9. Mécanisme (1) selon l'une quelconque des revendications 5 à 7, **caractérisé en ce que** les trous traversants respectifs aménagés dans les branches opposées (4a, 4b) de la deuxième partie (4) ont un diamètre différent, un de ceux-ci étant inférieur à la largeur maximale de la broche.
